# EUROPÄISCHE PATENTSCHRIFT

(11) **EP 2 949 421 B1**
(45) Veröffentlichungstag und Bekanntmachung des Hinweises auf die Patenterteilung: **12.07.2017**
(21) Anmeldenummer: 15001532.9
(22) Anmeldetag: 21.05.2015
(51) Int. Cl.: B23Q 7/18, B65G 47/244, B27M 1/08, B65G 47/24, B65G 49/06, B23Q 7/16

(54) **VERFAHREN ZUR AUSRICHTUNG PLATTENFÖRMIGER WERKSTÜCKE AUF EINER FÖRDEREINRICHTUNG EINER BEARBEITUNGSMASCHINE**
METHOD FOR ALIGNING PANEL SHAPED WORKPIECES ON A CONVEYING DEVICE OF A PROCESSING MACHINE
PROCÉDÉ D'ALIGNEMENT DE PIÈCES USINÉES EN FORME DE PLAQUE SUR UN DISPOSITIF DE TRANSPORT D'UNE MACHINE D'USINAGE

(30) Priorität: 27.05.2014 DE 102014008016
(43) Veröffentlichungstag der Anmeldung: 02.12.2015
(73) Patentinhaber: IMA Klessmann GmbH Holzbearbeitungssysteme, 32312 Lübbecke (DE)
(72) Erfinder: Schürmann, Ralf, DE - 32351 Stemwede (DE)
(74) Vertreter: Schober, Mirko

(56) Entgegenhaltungen:
- WO-A1-99/33600
- WO-A1-2005/042214
- WO-A1-2005/042215
- DE-A1- 1 456 777
- DE-A1- 2 715 194
- DE-A1- 3 447 703
- DE-A1- 3 607 454
- DE-A1- 3 914 640
- DE-A1- 4 409 780
- DE-A1-102010 019 345
- DE-U- 1 987 668

## Beschreibung

Die Erfindung betrifft ein Verfahren zur Ausrichtung plattenförmiger Werkstücke auf einer Fördereinrichtung einer Bearbeitungsmaschine gemäß dem Oberbegriff des Anspruchs 1. Ein solches Verfahren ist aus der DE1987668U bekannt. Bearbeitungsmaschinen der in Rede stehenden Art dienen insbesondere zur Bearbeitung von Werkstücken aus Holz oder Holzersatzwerkstoffen wie HDF, MDF, Spanplatten, Laminaten und dergleichen. Solche plattenförmigen Werkstücke sind häufig Halbzeuge für die Möbelherstellung.
Bearbeitungsmaschinen zur Bearbeitung plattenförmiger Werkstücke weisen oftmals eine Fördereinrichtung auf, die dazu dient, die Werkstücke entlang einer Förderrichtung zu fördern, beispielsweise um die Werkstücke einem Bearbeitungsaggregat zuzuführen oder die Werkstücke aus dem Bearbeitungsbereich eines Bearbeitungsaggregats heraus zu fördern. Auch kann ein maschineninterner Transport zwischen zwei Bearbeitungsaggregaten durch eine solche Fördereinrichtung realisiert sein.
Dabei sind derartige Fördereinrichtungen häufig so ausgebildet, dass die Werkstücke ihre Orientierung während des Transports beibehalten. Dies ist insofern nachteilig als bestimmte Bearbeitungsschritte bei derartigen Bearbeitungsmaschinen erleichtert oder ermöglicht werden, wenn das plattenförmige Werkstück eine gewisse Orientierung relativ zur Förderrichtung aufweist, beispielsweise um eine Bearbeitung zu ermöglichen, während das Werkstück an einem entsprechenden Bearbeitungsaggregat vorbei gefördert wird. Es ist daher wünschenswert, derartige Bearbeitungsmaschinen mit Manipulationseinrichtungen ausrichten zu können, welche eine Änderung der Orientierung des plattenförmigen Werkstücks während des Transports ermöglichen.
Derartiges ist grundsätzlich durch entsprechende aus dem Stand der Technik bekannte Werkstückmanipulatoren wie beispielsweise mehrachsige Roboter möglich, die ein Werkstück greifen, von der Fördereinrichtung aufnehmen und in einer anderen Orientierung wieder der Fördereinrichtung zuführen, beispielsweise das Werkstück um 90° um seine Hochachse gedreht wieder auf ein Förderband legen.
Derartige Manipulationseinrichtungen sind jedoch vergleichsweise komplex und damit entsprechend teuer.
Die Aufgabe der vorliegenden Erfindung ist es daher, ein Verfahren zur Ausrichtung plattenförmiger Werkstücke auf einer Fördereinrichtung einer Bearbeitungsmaschine zur Verfügung zu stellen, welche das Ausrichten, d.h. die Änderung der Orientierung der plattenförmigen Werkstücke, mit einem möglichst einfachen apparativen Aufwand ermöglicht.

Die Aufgabe wird gelöst durch ein Verfahren mit den Merkmalen des Anspruchs 1. Die Bearbeitungsmaschine weist eine Manipulationseinrichtung auf, die geeignet ist, die Ausrichtung der geförderten Werkstücke in Zusammenwirkung mit der Fördereinrichtung zu beeinflussen. Nach dem erfindungsgemäßen Verfahren geschieht dies dadurch, dass die Manipulationseinrichtung ein Werkstück derart angreift, dass das Werkstück aufgrund einer Relativbewegung zwischen einer Fördereinrichtung und dem Werkstück eine Drehbewegung ausführt. Dabei erfolgt die Drehbewegung insbesondere um eine vertikale Drehachse.

Die Relativbewegung zwischen der Fördereinrichtung und dem Werkstück sorgt dafür, dass auf das Werkstück eine, vorzugsweise in Förderrichtung gerichtete Kraftkomponente übertragen wird. Durch die Manipulationseinrichtung wird nun eine weitere Kraftkomponente, welche entgegen der Förderrichtung gerichtet ist, in das Werkstück eingeleitet.

Beide Kräfte können idealisiert als an einem Punkt des Werkstücks angreifende Kräfte betrachtet werden. Liegen diese Angriffspunkte beider Kräfte auf einer Linie entlang der Förderrichtung, so befindet sich das Werkstück hinsichtlich einer Drehung, insbesondere um seine vertikale Achse und damit einer möglichen Änderung seiner Ausrichtung, relativ zur Förderrichtung im Gleichgewicht. Liegen die beiden Punkte entlang der Förderrichtung jedoch nicht auf einer Linie, so resultiert daraus ein Drehmoment, welches durch die beiden eingeleiteten Kräfte auf das Werkstück wirkt und eine Drehung des Werkstücks verursacht.

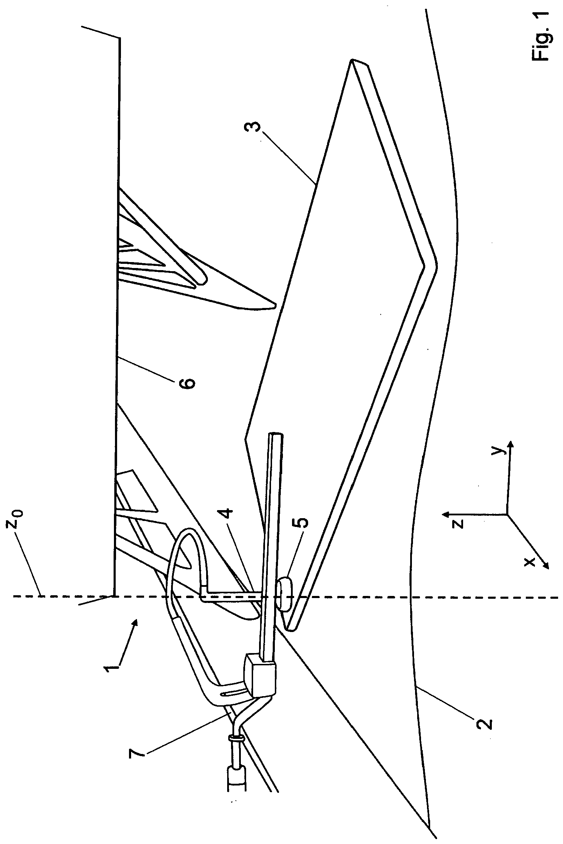

Vorteilhaft ist, insbesondere um den für das Drehen des Werkstücks notwendigen Schlupf zwischen Fördereinrichtung und Werkstück zu ermöglichen, wenn die Fördereinrichtung hierfür eine geeignete Oberflächenbeschaffenheit aufweist. Die Fördereinrichtung kann beispielsweise als Bandförderer ausgebildet sein. Im Hinblick auf die Reibung zwischen Werkstück und Fördereinrichtung hat sich insbesondere eine Bürsten- oder bürstenartige Struktur der Oberfläche der Fördereinrichtung als vorteilhaft erwiesen.
Die Manipulationseinrichtung greift vorzugsweise mit einem Manipulationselement an den geförderten Werkstücken an. Dieses Manipulationselement ist dabei insbesondere drehbar ausgebildet und/oder drehbar an der Manipulationseinrichtung aufgenommen. Ein solches drehbares Manipulationselement ist vorteilhaft, da die Drehung des Werkstücks bei einem derartigen Manipulationselement, insbesondere um die Drehachse des Manipulationselements erfolgt.
Das Werkstückmanipulationselement ist vorzugsweise derart ausgebildet, dass es eine temporäre mechanische Verbindung mit dem Werkstück, die zur Übertragung von Kräften geeignet ist, eingehen kann. Dabei hat sich gezeigt, dass die Ausbildung des Manipulationselements als Saugglocke oder ein anderes in seiner Wirkungsweise auf einem Unterdruck basierendes Verbindungselement zur Verbindung der Manipulationseinrichtung mit dem Werkstück vorteilhaft ist.
Die Manipulationseinrichtung ist vorzugsweise entlang einer von der Förderrichtung verschiedenen, insbesondere zur Förderrichtung senkrechten Querrichtung bewegbar. Eine derart bewegbare Manipulationseinrichtung ermöglicht es, das Werkstück entlang der Querrichtung relativ zur Fördereinrichtung zu verschieben. Erfindungsgemäß wird das Werkstück hinsichtlich seiner Orientierung um die Drehachse ausgerichtet. Erfindungsgemäß ist hierfür ein Ausrichteelement vorhanden, mit dem das Werkstück in Kontakt gebracht wird. Dies kann insbesondere durch eine Bewegung der Manipulationseinrichtung entlang der Querrichtung erfolgen. Es ist aber auch denkbar, das Ausrichteelement zu bewegen, um die Ausrichtung zu beeinflussen.
Bei dem Ausrichteelement kann es sich um einen Anschlag handeln. Vorzugsweise ist der Anschlag als parallel zur Förderrichtung verlaufende Begrenzung eines Förderbereichs der Fördereinrichtung ausgebildet.
Dabei erfolgt das Verfahren vorzugsweise derart, dass das Werkstück entlang der Querrichtung zunächst so positioniert wird, dass es nicht in Kontakt mit dem Ausrichteelement ist, so dass sich aufgrund der Relativbewegung zwischen der Fördereinrichtung und dem Werkstück eine Drehbewegung des Werkstücks bis in dessen Gleichgewichtslage ergibt. Dann wird in einem zweiten Schritt das Werkstück mit der Ausrichteeinrichtung in Kontakt gebracht. Dieses Inkontakbringen erzeugt eine weitere Drehbewegung des Werkstücks. Die weitere Drehbewegung resultiert dabei daraus, dass der Angriffspunkt der Manipulationseinrichtung weiter auf die Ausrichteeinrichtung zu bewegt wird, wenn diese bereits mit einem Punkt der Randkontur in Kontakt gekommen ist. Das Werkstück wird den durch diesen Kontakt entstehenden Reaktionskräften durch eine entsprechende Drehbewegung solange ausweichen, bis es zu einer flächigen Anlage bzw. einer Anlage in einer Mehrzahl Anlagepunkten des Werkstücks an der Ausrichteeinrichtung kommt. Erfindungsgemäß erfolgt die weitere Drehbewegung im entgegengesetzten Drehsinn wie die erste Drehbewegung. Hierdurch lässt sich das Drehen des Werkstücks durch die Ausrichteeinrichtung unterstützen. Es ist sogar möglich, dass Werkstück von der Gleichgewichtslage, die in der ersten Drehung erreicht wird und bei der sich die Angriffspunkte der durch die Fördereinrichtung auf das Werkstück ausgeübten Kraft und der Manipulationseinrichtung auf das Werkstück ausgeübten Kraft auf einer Linie befinden, weg zu drehen.
Die Erfindung wird im Folgenden anhand der Figuren 1 bis 5 schematisch näher erläutert.
Fig. 1 zeigt eine perspektivische Teildarstellung einer beispielhaften Bearbeitungsmaschine.
Fig. 2 bis 5 zeigen beispielhafte Teilschritte eines erfindungsgemäßen Verfahrens.

Die beispielhafte Bearbeitungsmaschine 1 weist eine Fördereinrichtung 2 zur Förderung plattenförmiger Werkstücke 3 auf. Bei der Bearbeitungsmaschine 1 kann es sich beispielsweise um eine Maschine zum Zuschneiden der plattenförmigen Werkstücke handeln. Vorzugsweise handelt es sich um eine Maschine, die eine Bearbeitung der plattenförmigen Werkstücke im Bereich derer Schmalseiten durchführt.
Bei den Werkstücken handelt es sich vorzugsweise um plattenförmige Werkstücke aus Holz oder Holzersatzwerkstoffen, also insbesondere Spanplatten, HDF, MDF, Laminate oder dergleichen. Besonders bevorzugt handelt es sich bei den Werkstücken 3 um Halbzeuge für die Möbelverarbeitung, also Möbelplatten.

Die Werkstücke 3 werden durch die Fördereinrichtung 2, bei der es sich bevorzugt um ein Förderband mit einer mit Bürsten besetzten Oberfläche handelt, gefördert.

Die beispielhafte Bearbeitungsmaschine 1 weist eine Manipulationseinrichtung 4 auf. Die Manipulationseinrichtung 4 greift im gezeigten Beispiel mit einem als Saugglocke ausgebildeten Manipulationselement 5 an dem Werkstück 3 an. Die drehbare Ausbildung des beispielhaften Manipulationselements 5 bedingt dabei, dass die Achse Z0, welches die Drehachse des Manipulationselements 5 ist, auch die Drehachse der resultierenden Drehbewegung des Werkstücks 3 ist.
Die Manipulationseinrichtung 4 ist im gezeigten Beispiel an einer Traverse 6 in der im gezeigten Beispiel zur Förderrichtung X senkrecht verlaufenden Querrichtung Y bewegbar angeordnet. Dadurch wird es möglich, mit der Manipulationseinrichtung 4 das Werkstück 3 entlang der Querrichtung Y auf der Fördereinrichtung 2 zu verschieben. Dies ermöglicht es insbesondere, das Werkstück 3 auf ein Ausrichteelement 7 zuzubewegen und/oder mit diesem in Kontakt zu bringen. Das Ausrichteelement 7 ist im gezeigten Beispiel als Anschlag ausgeführt, welcher sich entlang der Förderrichtung X erstreckt und vorzugsweise die seitliche Begrenzung des Förderbereichs der Fördereinrichtung 2 bildet.

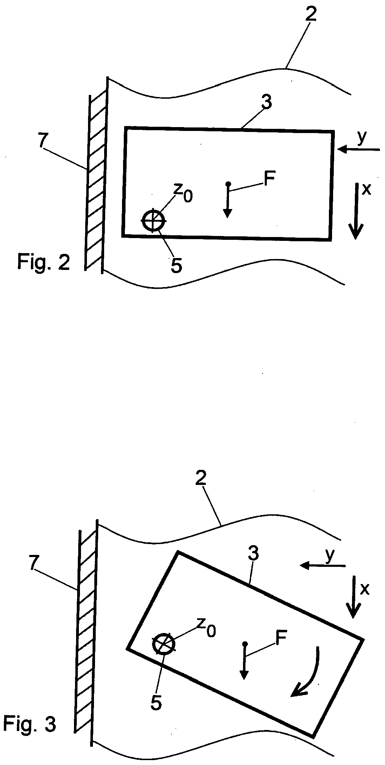

Mit der vorteilhaften vorrichtung ist nun die Durchführung des Verfahrens beispielsweise mit den in Fig. 2 bis 5 schematisch dargestellten Verfahrensschritten möglich.

Fig. 2 zeigt ein Werkstück 3, welches gemäß der gezeigten vorteilhaften Ausführungsform flachliegend auf der Fördereinrichtung 2 transportiert wird. Das Werkstück 3 befindet sich dabei zunächst in einer ersten Ausrichtung hinsichtlich einer Drehung um die Drehachse Z0, mit der es beispielsweise in einem vorgehenden Bearbeitungsschritt bearbeitet, beispielsweise geschnitten und/oder gefräst worden ist.

Vorzugsweise zur Ermöglichung eines weiteren nachgeschalteten Bearbeitungsschritts soll nun eine Drehung des Werkstücks nach dem erfindungsgemäßen Verfahren erfolgen. Hierzu greift das Manipulationselement 5 an einer Stelle des Werkstücks 3 an und hält das Werkstück an dieser Stelle fest, d.h. es stoppt bzgl. dieser Stelle des Werkstücks 3 die Förderbewegung in Förderrichtung X.

Die Fördereinrichtung 2 übt nun durch den so erzeugten Schlupf zwischen Fördereinrichtung 2 und Werkstück 3, beispielsweise durch das Durchrutschen eines Förderbandes, eine durch die virtuelle Kraft F als Ersatzkraft beschreibbare Kraft auf das Werkstück 3 auf. Der virtuelle Ansatzpunkt der Kraft F an dem Werkstück 3 ergibt sich beispielsweise bei einer homogenen Verteilung der Reibkraft zwischen Fördereinrichtung 2 und Werkstück 3 über die Fläche des Werkstücks 3 als der Flächenschwerpunkt des Werkstücks 3.

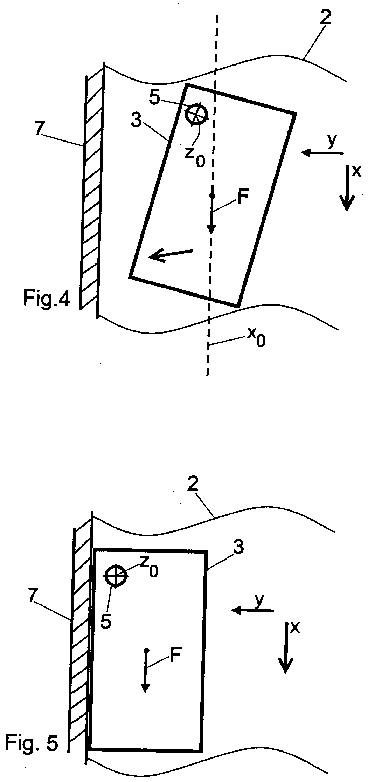

Die in diesem Punkt angreifende Kraft übt - wie in Fig. 3 dargestellt - nun ein Drehmoment auf das Werkstück 3 bzgl. der Drehachse Z0 aus. Infolgedessen setzt eine Drehbewegung ein bis der Gleichgewichtszustand, bei dem der Ansatzpunkt der theoretischen Ersatzkraft F entlang der Wirkungsrichtung der Kraft F, also der Förderrichtung X auf einer Linie mit der Drehachse Z0 liegt. Fig. 4 zeigt die Drehung des beispielhaften erfindungsgemäßen Werkstücks 3 kurz vor Erreichen dieses Gleichgewichtszustandes.
Das effektive Drehmoment, welches die Drehbewegung des Werkstücks 3 bewirkt, hängt dabei von dem Abstand der Wirkungslinie X0 der Ersatzkraft F zur Drehachse Z0 ab. Wird dieser Abstand Null, ist der Gleichgewichtszustand erreicht.
Um nun gezielt eine andere als die diesem Gleichgewichtszustand entsprechende Orientierung herbeizuführen, kann das Manipulationselement 5 und damit das Werkstück 3 nun vorzugsweise entlang der Querrichtung Y auf das Ausrichteelement 7 zu bewegt werden. Wenn das Werkstück 3 mit dem Ausrichteelement 7 in Kontakt kommt, wirkt das Ausrichteelement 7 ebenfalls mit einer Kraft auf die Schmalseite des Werkstücks 3 ein. Hierdurch wird ein Gegendrehmoment erzeugt, welches das Werkstück 3 nun wieder in eine neue Orientierung bewegt. D.h. mit anderen Worten, wenn das Werkstück von der in Fig. 4 beispielhaft gezeigten Ausrichtung in die in Fig. 5 gezeigte überführt wird, bewirkt das Ausrichteelement 7 eine Drehung des Werkstücks 3 um die Achse Z0, die von der Gleichgewichtslage der ersten in den Fig. 2, 3 und 4 dargestellten Drehbewegung wegführt. Auf diese Weise ist es möglich, beispielsweise indem - wie in Fig. 5 gezeigt - das Werkstück 3 mit einer seiner Schmalseiten in Anlage mit dem Ausrichteelement 7 gebracht wird, das Werkstück 3 gezielt sowohl in seiner Orientierung als auch in seiner relativen Position entlang der Querrichtung Y an dem Ausrichteelement 7 auszurichten.

## Patentansprüche

1. Verfahren zur Ausrichtung plattenförmiger Werkstücke (3), insbesondere aus Holz oder Holzersatzwerkstoffen, auf einer Fördereinrichtung (2) einer Bearbeitungsmaschine (1), wobei ein Werkstück (3) durch die Fördereinrichtung (2) entlang einer Förderrichtung (X) gefördert wird, wobei eine Manipulationsvorrichtung (4) an dem Werkstück (3) derart angreift, dass das Werkstück (3) aufgrund einer Relativbewegung zwischen der Fördereinrichtung (2) und dem Werkstück (3) eine Drehbewegung um eine, vorzugsweise vertikale, Drehachse (Z0) ausführt, **dadurch gekennzeichnet, dass** das Werkstück (3) zunächst ohne Kontakt zu einem Ausrichteelement (7) durch eine erste Drehbewegung um die Drehachse (Z0) zu einer Gleichgewichtslage hin ausgerichtet wird und daraufhin durch das Inkontaktbringen des Werkstücks (3) mit dem Ausrichtelement (7) eine weitere Drehbewegung erzeugt wird, wobei die weitere Drehbewegung im entgegengesetzten Drehsinn von der ohne Kontakt zu dem Ausrichteelement (7) erreichten Gleichgewichtslage der ersten Drehbewegung weg führt.

2. Verfahren nach Anspruch 1, **dadurch gekennzeichnet,**
**dass** das Werkstück (3) durch die Manipulationsvorrichtung (4) entlang einer von der Förderrichtung (X) verschiedenen, insbesondere zur Förderrichtung (X) senkrechten Querrichtung (Y) bewegt, und vorzugsweise durch diese Bewegung mit dem Ausrichteelement (7) in Kontakt gebracht wird.

## Claims

1. Method for aligning panel shaped workpieces (3), more particularly of wood or wood substitutes, on a conveying device (2) of a processing machine (1) wherein a workpiece (3) is conveyed by the conveying device (2) along a conveying direction (X), wherein a manipulation device (4) engages on the workpiece (3) in such a manner that through relative movement between the conveying device (2) and the workpiece (3) the workpiece (3) executes a rotational movement about a preferably vertical axis of rotation (Z0) **characterised in that** the workpiece (3) is aligned initially without contact with an alignment element (7) through a first rotational movement about the axis of rotation (Z0) towards an equilibrium position and then by bringing the workpiece (3) into contact with the alignment element (7) a further rotational movement is produced wherein the further rotational movement in the opposite direction of rotation leads away from the equilibrium position of the first rotational movement achieved without contact with the alignment element (7).

2. Method according to claim 1 **characterised in that** the workpiece (3) is moved by the manipulation device (4) along a transverse direction (Y) which is different from the conveying direction (X), more particularly perpendicular to the conveying direction (X), and is preferably brought by this movement into contact with the alignment element (7).

## Revendications

1. Procédé d'alignement de pièces à usiner en forme de plaques (3), en particulier en bois ou en matériau de remplacement du bois, sur un dispositif de transport (2) d'une machine de traitement (1), une pièce à usiner (3) étant transportée par le dispositif de transport (2) dans une direction de transport (X), sachant qu'un dispositif de manipulation (4) attaque la pièce à usiner (3) de manière à ce que la pièce à usiner (3), en raison d'un mouvement relatif s'effectuant entre le dispositif de transport (2) et la pièce à usiner (3), exécute une rotation autour d'un axe de rotation (Z0), de préférence vertical,
**caractérisé en ce que**
la pièce à usiner (3) est d'abord alignée, sans contact avec un élément d'alignement (7), par un premier mouvement autour de l'axe de rotation (ZO), dans le but d'une position d'équilibrage, et qu'un autre mouvement de rotation est ensuite généré par l'entrée en contact de la pièce à usiner (3) avec l'élément d'alignement (7), sachant que l'autre mouvement de rotation, effectué dans le sens de rotation opposé, détourne de la position d'équilibrage du premier mouvement de rotation, atteinte sans contact avec l'élément d'alignement (7).

2. Procédé selon la revendication 1,
**caractérisé en ce que**
la pièce à usiner (3) est mue, par le dispositif de manipulation (4), dans une direction transversale (Y), différente de la direction de transport (X), en particulier perpendiculaire à la direction de transport (X), et est préférentiellement amenée en contact avec l'élément d'alignement (7) par ce mouvement.
